Europäisches Patentamt

European Patent Office

Office européen des brevets

(19)

(11) Numéro de publication : **0 148 664 B1**

(12) **FASCICULE DE BREVET EUROPÉEN**

(45) Date de publication du fascicule du brevet :
08.07.87

(51) Int. Cl.⁴ : **B 62 D   5/04**

(21) Numéro de dépôt : **84402443.0**

(22) Date de dépôt : **29.11.84**

(54) **Direction de véhicule automobile à commande assistée par un moteur électrique.**

(30) Priorité : **16.12.83 FR 8320520**

(43) Date de publication de la demande :
**17.07.85 Bulletin 85/29**

(45) Mention de la délivrance du brevet :
**08.07.87 Bulletin 87/28**

(84) Etats contractants désignés :
**DE GB IT**

(56) Documents cités :
**EP-A- 0 081 025**
**US-A- 4 415 054**

(73) Titulaire : **AUTOMOBILES CITROEN**
**62 Boulevard Victor-Hugo**
**F-92200 Neuilly-sur-Seine (FR)**

**AUTOMOBILES PEUGEOT**
**75, avenue de la Grande Armée**
**F-75116 Paris (FR)**

(72) Inventeur : **Galtier, Lucien Emilien**
**28, rue de Favigny**
**91390 Morsang sur Orge (FR)**

(74) Mandataire : **Boivin, Claude**
**9, rue Edouard-Charton**
**F-78000 Versailles (FR)**

EP 0 148 664 B1

## Description

La présente invention concerne les directions de véhicule automobile comportant une colonne de direction munie d'une denture en prise avec une crémaillère reliée par des leviers de direction aux roues directrices du véhicule, un moteur électrique propre à déplacer la crémaillère et relié à celle-ci par un dispositif de transmission indépendant de la colonne de direction et de la denture, et des moyens sensibles à l'effort exercé sur la direction et au sens de cet effort pour faire tourner le moteur électrique.

Le brevet US-A-4,415,054 décrit une direction de véhicule de ce type dans laquelle le moteur est à deux sens de rotation et est commandé par un dispositif de détection à barre de torsion interposé entre le volant et l'arbre de direction, ce dispositif fournissant au moteur un signal dont le sens et l'amplitude dépendent du couple détecté par la barre de torsion. Mais cette direction présente une vitesse de réponse relativement faible.

La présente invention a pour objet une direction de véhicule du type ci-dessus mais dont la vitesse de réponse est plus grande et dont l'endurance est améliorée.

La direction à commande assistée selon l'invention est caractérisée en ce que le moteur est relié à la crémaillère par l'intermédiaire de deux embrayages associés chacun à l'un des sens de déplacement de la crémaillère, en ce que la crémaillère est contenue dans un boîtier comprenant une partie fixe solidaire de la structure du véhicule et une partie qui est mobile dans la direction de la crémaillère sous l'effet de la réaction des roues directrices et sur laquelle est montée la colonne de direction, des moyens élastiques tendant à maintenir la partie mobile dans une position moyenne à partir de laquelle elle peut se déplacer dans un sens ou dans le sens opposé, et en ce que la direction comprend des moyens commandés par le déplacement de la partie mobile pour enclencher l'un ou l'autre des embrayages, l'embrayage enclenché dépendant du sens du déplacement de cette partie mobile.

Lorsque le conducteur actionne l'arbre de direction, la réaction des roues directrices s'oppose au déplacement de la crémaillère de sorte que la colonne de direction se déplace légèrement en entraînant la partie mobile du boîtier, ce qui enclenche l'un ou l'autre embrayage, le moteur entraînant alors la crémaillère dans le sens voulu.

Les embrayages sont de préférence des embrayages à friction disposés coaxialement à la crémaillère. Dans ce cas, l'enclenchement de l'un ou l'autre des embrayages est fonction du déplacement de la partie mobile, donc de la réaction des roues. L'effort d'assistance est ainsi proportionné à cette réaction.

La crémaillère peut comporter sur une partie de sa longueur un filetage sur lequel est engagé un écrou immobilisé en translation, les embrayages étant interposés entre cet écrou et le moteur.

L'arbre de sortie du moteur peut être relié à deux couronnes dentées coaxiales à la crémaillère, de manière que ces couronnes tournent en sens inverse, chacune de ces couronnes étant reliée par une roue libre à l'écrou et les embrayages étant interposés entre les couronnes et le moteur.

Le moteur électrique peut être disposé de manière que son arbre de sortie sont perpendiculaire à la crémaillère, cet arbre portant un pignon conique interposé entre les couronnes dentées et en prise avec celles-ci.

Le moteur électrique peut également avoir son arbre de sortie coaxial à la crémaillère et relié aux couronnes dentées par des pignons.

La direction peut comporter un détecteur sensible au déplacement de la partie mobile du boîtier et propre à mettre le moteur électrique sous tension avant l'enclenchement de l'un ou l'autre des embrayages.

On a décrit ci-après, à titre d'exemples non limitatifs, deux modes de réalisation de la direction assistée selon l'invention, avec référence aux dessins annexés dans lesquels :

La Figure 1 est une vue en élévation avec coupe partielle d'un premier mode de réalisation ;

La Figure 2 est une vue en coupe axiale à plus grande échelle d'un détail de ce mode de réalisation ;

La Figure 3 est une vue en coupe transversale suivant III-III de la Figure 2 ;

La Figure 4 est une vue en coupe axiale d'un second mode de réalisation ;

La Figure 5 en est une vue en coupe transversale suivant V-V de la Figure 4 ;

La Figure 6 montre en coupe un détail d'un embrayage, les éléments de celui-ci étant représentés séparés.

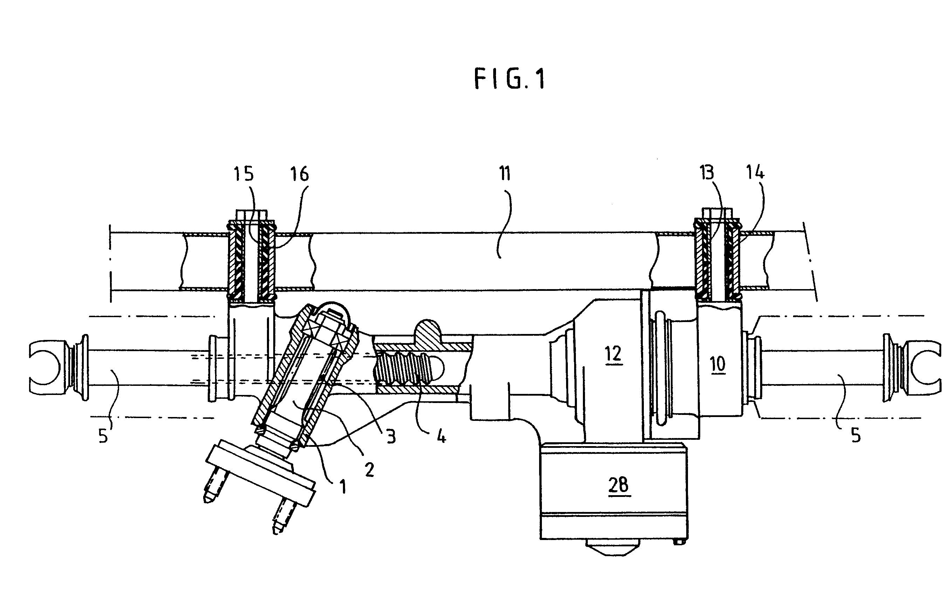

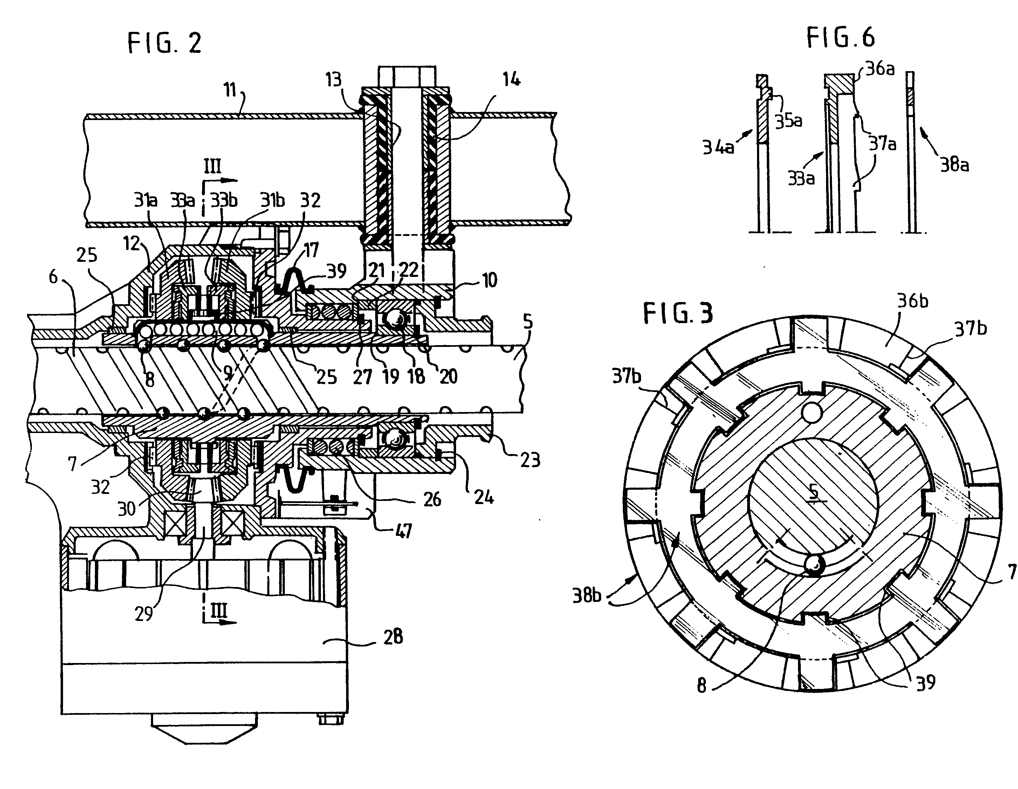

A la Figure 1, on voit une colonne de direction 1 dans laquelle est monté à rotation l'arbre de direction 2. Celui-ci porte une denture 3 qui fait saillie à travers une ouverture de la colonne 1 et est en prise avec la denture 4 d'une crémaillère 5. Celle-ci est reliée par des leviers non représentés aux roues directrices du véhicule. La denture 4 est taillée sur une longueur de la crémaillère correspondant au débattement maximal approprié au pivotement des roues directrices (voir Figure 2).

Sur une autre partie de sa longueur la crémaillère comporte un filetage 6 formé de trois filets parallèles et engagé dans un écrou ou douille 7 à billes 8 ; on voit en 9 le chemin de retour des billes.

La crémaillère 5 est logée dans un boîtier comprenant une partie 10 qui est fixe par rapport à une traverse 11 du véhicule et une partie 12 qui peut se déplacer par rapport à cette traverse, dans l'axe de la crémaillère. La partie 10 est fixée à la traverse 11 par un boulon 13 avec interposition d'une bague 14 suffisamment souple pour permettre le montage, le boulon étant serré après réglage. De son côté, la partie 12 est reliée à la traverse par un boulon 15 avec interposition d'une bague élastique 16. Les deux parties 10 et 12 du boîtier sont reliées l'une à l'autre par un soufflet élastique d'étanchéité 17. La colonne de direction 1 est portée par la partie mobile 12 du boîtier.

Un roulement 18 est maintenu en appui contre un épaulement externe 19 de l'écrou 7 par un clips 20. Ce roulement est par ailleurs maintenu en appui contre un épaulement interne 21 de la partie fixe 10 du boîtier, avec interposition d'une bague 22, par un bouchon 23 qui est engagé dans la partie 10 et lui-même maintenu par un clips 24. L'écrou 7 est ainsi immobilisé longitudinalement par rapport à la partie 10 ; il repose en outre sur la partie mobile 12 par l'intermédiaire de bagues anti-friction 25 permettant le déplacement longitudinal de cette partie mobile par rapport à l'écrou.

Un ressort 26, interposé entre des épaulements des parties fixe 10 et mobile 12 d'une part, et la bague 22 et un clips 27 d'autre part, tend à maintenir ces parties fixe et mobile dans une position relative moyenne, la partie 12 pouvant se déplacer axialement par rapport à la partie 10 dans un sens ou dans l'autre, à partir de cette position moyenne.

Dans le mode de réalisation des Figures 1 à 3, un moteur électrique 28 est fixé sur la partie mobile 12 du boîtier, en ayant son arbre de sortie 29 orienté perpendiculairement à la crémaillère 5. Un pignon conique 30 fixé sur l'arbre 29 est en prise avec deux couronnes dentées 31a et 31b qui sont montées à rotation sur l'écrou 7, de part et d'autre de l'axe de l'arbre 29 de sorte qu'elles tournent en sens inverse, et peuvent se déplacer axialement sur cet écrou. Ces deux couronnes prennent appui sur la partie mobile 12 du boîtier par l'intermédiaire de roulements à rouleaux 32.

Chacune des couronnes dentées 31a et 31b est reliée à l'écrou 7 par un embrayage à friction qui est disposé à l'intérieur de la couronne et qui est enclenché lorsque la partie mobile 12 du boîtier se déplace dans sa direction. Dans la position moyenne de la partie 12, déterminée par le ressort 26, aucun des deux embrayages n'est enclenché.

Chacun des embrayages comprend un moyeu 33a ou 33b qui est monté libre sur l'écrou 7 et dont la face tournée vers la couronne correspondante est solidarisée avec un disque d'embrayage 34a ou 34b grâce à des empreintes 35a ou 35b dont est muni ce disque. Chacun des moyeux 33a ou 33b présente une bordure 36a ou 36b dont la tranche présente des crantages 37a ou 37b ; ces crantages présentent un bord vif dans un sens et un bord penté dans le sens opposé (voir Figure 6).

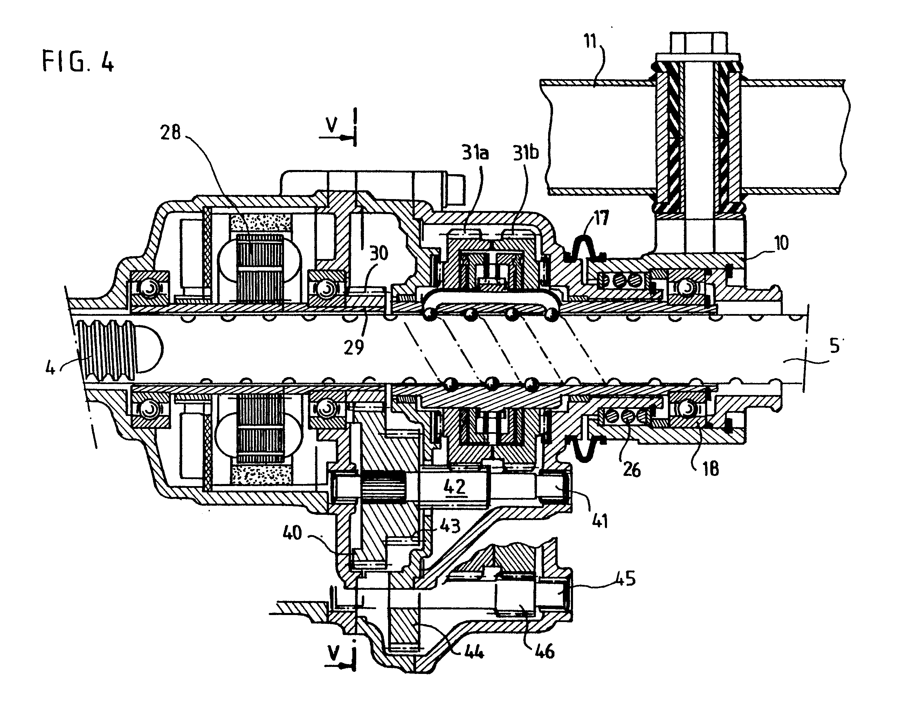

Sur l'écrou 7 sont montées deux rondelles d'entraînement 38a et 38b. Chacune de ces rondelles comporte sur son périmètre intérieur un crantage qui est engagé dans des cannelures périphériques 39 de l'écrou 7, de sorte que cet écrou est solidaire en rotation de la rondelle. Elle comporte également sur son périmètre extérieur un crantage qui s'engage dans les crantages 37a ou 37b des moyeux 33a et 33b (voir Figure 3).

Les rondelles d'entraînement jouent le rôle de roues libres. Un moyeu 33a ou 33b peut entraîner la rondelle correspondante 38a ou 38b, donc l'écrou 7 ; inversement, si la rondelle est entraînée en rotation par l'écrou, elle glisse sur le côté penté des crantages 37a ou 37b du moyeu 33a ou 33b.

Lorsque le conducteur fait pivoter l'arbre 2, les réactions des roues directrices tendent à s'opposer au déplacement de la crémaillère de sorte que la colonne 1 se déplace dans l'axe de la crémaillère, dans un sens ou dans l'autre, suivant le sens de rotation de l'arbre 2.

En se déplaçant, la colonne 1 entraîne contre l'action du ressort 26, la partie mobile 12 du boîtier, donc les couronnes 31a et 31b. La couronne 31a par exemple est ainsi appliquée contre le disque d'embrayage 34a, avec une force qui dépend de la réaction des roues directrices de sorte qu'elle entraîne en rotation le moyeu 33a, la rondelle 38a et l'écrou 7. Comme cet écrou est fixe en translation, il fait déplacer la crémaillère 5 dans le sens dans lequel agit l'arbre 2. Si le mouvement de cet arbre change de sens, la couronne 31b devient à son tour active et entraîne un déplacement en sens contraire de la crémaillère.

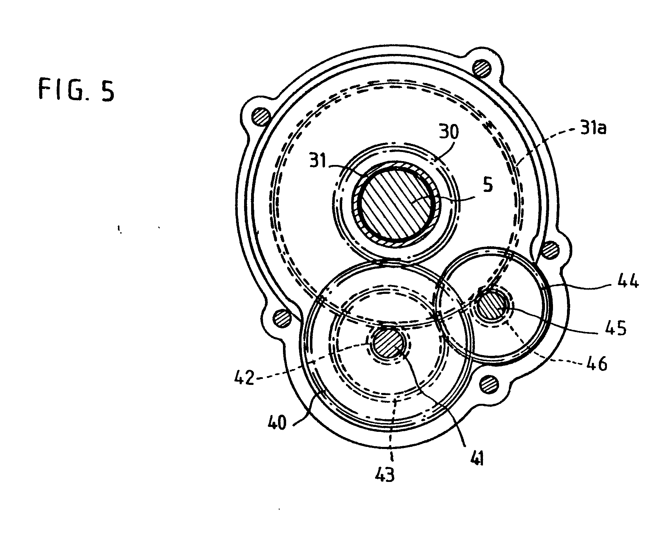

Dans le mode de réalisation des Figures 4 et 5, le moteur électrique 28 est monté coaxialement à la crémaillère 5. Le pignon 30 calé sur son arbre de sortie 29 est en prise avec un pignon 40 claveté sur un arbre 41. Cet arbre porte par ailleurs un pignon 42 en prise avec la couronne 31a et un pignon 43 en prise avec un pignon inverseur 44. Celui-ci est calé sur un arbre 45 qui porte également un pignon 46 en prise avec la couronne 31b.

La référence 47 désigne un boîtier de détection qui pourrait être électronique ou électro-mécanique. Ce boîtier, qui est fixé sur la partie fixe 10 du boîtier et comporte un élément de commande solidaire de la partie mobile 12, détecte le déplacement relatif de ces parties fixe et mobile et met sous tension le moteur électrique 28 avant que l'embrayage ne se produise.

La direction qui vient d'être décrite présente notamment les avantages suivants :

Elle forme ensemble compact avec un volume mieux réparti autour de la crémaillère, ce qui peut faciliter l'adaptation sur véhicule

si on souhaite remplacer sur un véhicule une direction mécanique par une direction assistée, le nombre de pièces spécifiques est réduit

éloignement des moyens d'assistance par rapport au conducteur, en particulier du moteur électrique, ce qui limite les risques de bruits et vibrations

les liaisons mécaniques du volant jusqu'aux roues sont identiques à la direction mécanique ; les moyens d'assistance n'introduisent aucun jeu.

**Revendications**

1. Direction de véhicule automobile à commande assistée comprenant une colonne de direction (1) munie d'une denture (3) en prise avec une crémaillère (5) reliée par des leviers de direction aux roues directrices du véhicule, un moteur électrique (28) propre à déplacer la crémaillère (5) et relié à cette crémaillère par un dispositif de transmission indépendant de la colonne de direction (1) et de la denture (3), et des moyens sensibles à l'effort exercé sur la direction et au sens de cet effort pour faire tourner le moteur électrique, caractérisée en ce que le moteur est relié à la crémaillère par l'intermédiaire de deux embrayages associés chacun à l'un des sens de déplacement de la crémaillère, en ce que la crémaillère (5) est contenue dans un boîtier comprenant une partie fixe (10) solidaire de la structure du véhicule et une partie (12) qui est mobile dans la direction de la crémaillère sous l'effet de la réaction des roues directrices et sur laquelle est montée la colonne de direction (1), des moyens élastiques (26) tendant à maintenir la partie mobile (12) dans une position moyenne à partir de laquelle elle peut se déplacer dans un sens ou dans le sens opposé, et en ce que la direction comprend des moyens commandés par le déplacement de la partie mobile (12) pour enclencher l'un ou l'autre des embrayages, l'embrayage enclenché dépendant du sens du déplacement de cette partie mobile.

2. Direction selon la revendication 1, caractérisée en ce que les embrayages sont à friction et disposés coaxialement à la crémaillère.

3. Direction selon la revendication 1 ou 2, dans laquelle la crémaillère (5) comporte sur une partie de sa longueur un filetage sur lequel est engagé un écrou (7) immobilisé en translation, caractérisée en ce que les embrayages sont interposés entre cet écrou et le moteur.

4. Direction selon la revendication 2 ou 3, caractérisée en ce que l'arbre de sortie (29) du moteur (28) est relié à deux couronnes dentées (31a et 31b) coaxiales à la crémaillère (5), de manière que ces couronnes tournent en sens inverse, chacune de ces couronnes étant reliée par une roue libre à l'écrou (7) et les embrayages étant interposés entre les couronnes et le moteur.

5. Direction selon la revendication 4, caractérisée en ce que le moteur électrique (28) a son arbre de sortie (29) perpendiculaire à la crémaillère (5), cet arbre portant un pignon conique (30) interposé entre les couronnes dentées (31a et 31b) et en prise avec celles-ci.

6. Direction selon l'une des revendications précédentes, caractérisée par un détecteur (47) sensible au déplacement de la partie mobile (12) du boîtier et propre à mettre le moteur électrique (28) sous tension avant l'enclenchement de l'un ou l'autre des embrayages.

**Claims**

1. Assisted steering for motor vehicle, comprising a steering column (1) with teeth (3) meshing with a rack (5) connected by steering rods to the front wheels of the vehicle, an electric motor (28) adapted for moving the rack (5) and connected to this rack by a transmission device independent of the steering column (1) and of the teeth (3), and means sensitive to the force exerted on the steering and in the direction of this force to cause the electric motor to rotate, characterized in that the motor is connected to the rack by means of two couplings each associated with one of the directions of movement of the rack, in that the rack (5) is contained in a case having a fixed part (10) integral with the structure of the vehicle and a part (12) which is movable in the direction of the rack under the effect of the reaction of the front wheels and on which the steering column (1) is mounted, resilient means (26) tending to hold the movable part (12) in a mean position from which it may move in one direction or in the opposite direction, and in that the steering includes means controlled by the movement of the movable part (12) for engaging one or other of the couplings, the engaged coupling depending on the direction of movement of this movable part.

2. Steering according to claim 1, characterized in that the couplings are friction couplings and are disposed coaxially to the rack.

3. Steering according to claim 1 or 2, wherein the rack (5) has over a part of its length a threaded portion on which is engaged a nut (7) immobilized against translation, characterized in that the couplings are interposed between this nut and the motor.

4. Steering according to claim 2 or 3, characterized in that the output shaft (29) of the motor (28) is connected to two ring gears (31a, and 31b) coaxial with the rack (5), so that these gear wheels rotate in opposite directions, each of these gear wheels being connected by a free wheel to the nut (7) and the couplings being interposed between the gear wheels and the motor.

5. Steering according to claim 4, characterized in that the electric motor (28) has its output shaft (29) perpendicular to the rack (5), this shaft having a bevel gear (30) interposed between the ring gears (31a and 31b) and meshing therewith.

6. Steering according to one of the preceding claims, characterized by a detector (47) responsive to the movement of the movable part (12) of the case and adapted to switch on the electric motor (28) with engagement of one or other of the couplings.

**Patentansprüche**

1. Kraftfahrzeug-Lenkung mit Hilfssteuerung, die eine Lenksäule (1) aufweist, welche mit einer Verzahnung (3) versehen ist, die mit einer über Lenkhebel mit den Vorderrädern des Fahrzeugs verbundenen Zahnstange (5) in Eingriff steht und einen zur Verschiebung der Zahnstange (5) geeigneten Elektromotor (28), der mit dieser Zahnstange über eine von der Lenksäule (1) und der Verzahnung (3) unabhängige Übertragungsvorrichtung verbunden ist, sowie Mittel, die auf eine auf die Lenkung ausgeübte Kraft und die Richtung dieser Kraft ansprechen, um den Elektromotor in Drehung zu versetzen, dadurch gekennzeichnet, daß der Motor mit der Zahnstange unter Zwischenschaltung von zwei Kupplungen verbunden ist, von denen jede einer der Verschiebungsrichtungen der Zahnstange zugeordnet ist, daß die Zahnstange (5) in einem Gehäuse gehaltert ist mit einem festen Teil (10), der kraftschlüssig mit dem Fahrzeugaufbau verbunden ist und einem Teil (12), der in Richtung der Zahnstange unter der Einwirkung der Reaktion der Vorderräder beweglich ist und an dem die Lenksäule (1) befestigt ist, wobei elastische Mittel (26) das Bestreben haben, den beweglichen Teil (12) in einer mittleren Position zu halten, aus der er sich in der einen oder der entgegengesetzten Richtung verschieben kann und daß die Lenkung durch die Verschiebung des beweglichen Teils (12) gesteuerte Mittel aufweist zum Einrücken der einen oder der anderen Kupplung, wobei die eingerückte Kupplung von der Richtung der Verschiebung dieses beweglichen Teils abhängt.

2. Lenkung nach Anspruch 1, dadurch gekennzeichnet, daß die Kupplungen Reibungskupplungen sind und koaxial zur Zahnstange angeordnet sind.

3. Lenkung nach Anspruch 1 oder 2, bei welcher die Zahnstange (5) auf einem Teil ihrer Länge ein Gewinde aufweist, in das eine in Translationsrichtung festgelegte Schraubenmutter (7) eingeift, dadurch gekennzeichnet, daß die Kupplungen zwischen dieser Schraubenmutter und dem Motor angeordnet sind.

4. Lenkung nach Anspruch 2 oder 3, dadurch gekennzeichnet, daß die Abtriebswelle (29) des Motors (28) mit zwei koaxial zur Zahnstange (5) angeordneten Zahnkränzen (31a und 31b) verbunden ist, derart, daß diese Zahnkränze sich gegensinnig drehen, wobei jeder dieser Zahnkränze über ein freies Rad mit der Schraubenmutter (7) verbunden ist und die Kupplungen zwischen die Zahnkränze und den Motor eingeschaltet sind.

5. Lenkung nach Anspruch 4, dadurch gekennzeichnet, daß die Abtriebswelle (29) des Elektromotors (28) senkrecht zur Zahnstange (5) angeordnet ist, wobei diese Abtriebswelle ein Antriebskegelrad (30) trägt, das zwischen die Zahnkränze (31a und 31b) eingeschaltet ist und mit diesen in Eingriff steht.

6. Lenkung nach einem der vorhergehenden Ansprüche, gekennzeichnet durch einen Detektor (47), der auf die Verschiebung des beweglichen Teils (12) des Gehäuses anspricht und dafür geeignet ist, den Elektromotor (28) vor dem Einrücken der einen oder der anderen Kupplung unter Spannung zu setzen.

FIG.1

FIG. 2

FIG. 6

FIG. 3

0 148 664

FIG. 4

0 148 664

FIG. 5